Europäisches Patentamt

European Patent Office

Office européen des brevets

(19)

(11) Veröffentlichungsnummer : **0 064 731**
**B1**

(12) ## EUROPÄISCHE PATENTSCHRIFT

(45) Veröffentlichungstag der Patentschrift :
30.01.85

(51) Int. Cl.⁴ : **G 11 B 23/02, G 11 B 17/02**

(21) Anmeldenummer : **82103955.9**

(22) Anmeldetag : **06.05.82**

(54) **Plattenkassette für Datenspeichergerät.**

(30) Priorität : **07.05.81 DE 8113463 U**

(43) Veröffentlichungstag der Anmeldung :
**17.11.82 Patentblatt 82/46**

(45) Bekanntmachung des Hinweises auf die Patenterteilung : **30.01.85 Patentblatt 85/05**

(84) Benannte Vertragsstaaten :
**BE DE FR GB IT NL**

(56) Entgegenhaltungen :
**EP-A- 0 014 231**
**DE-B- 2 408 589**
**US-A- 3 813 678**
**US-A- 3 973 273**

(73) Patentinhaber : **Siemens Aktiengesellschaft
Berlin und München Wittelsbacherplatz 2
D-8000 München 2 (DE)**

(72) Erfinder : **Biermeier, Johann, Ing. grad.
Joergstrasse 82
D-8000 München 21 (DE)**
Erfinder : **Brand, Wilhelm, Ing. grad.
Turnerweg 21
D-8200 Rosenheim (DE)**

## Beschreibung

Die vorliegende Erfindung betrifft eine Plattenkassette für ein Datenspeichergerät gemäß dem Oberbegriff des Hauptanspruches.

Bei Datenspeichergeräten, insbesondere bei Festplattenspeichern ist es bekannt, die Spindel mit den Speicherplatten und die Übertragerköpfe, die auf positionierbaren Wagen angeordnet sind, sowie deren Führungsbahnen zu einer auswechselbaren staubdicht gekapselten Plattenkassette zusammenzufügen. Damit wird eine feste Zuordnung der Übertragerköpfe zu den Speicherplatten ermöglicht, die im Vergleich zu den bekannten Wechselplattenspeichern wegen geringerer Toleranzen höhere Speicherdichten erlaubt. Ferner erleichtert das Bauprinzip der geschlossenen Kassette die Schaffung der funktionswichtigen sauberen Umgebung im Bereich der Speicherplatten und der Übertragerköpfe.

So wird z. B. in der Offenlegungsschrift 26 29 755 ein Datenspeichergerät mit einer derartigen Plattenkassette beschrieben, die jedoch nur einen verschiebbaren Positionierwagen enthält, auf dem sich alle Übertragerköpfe befinden. Die Spindel für die Speicherplatten ist nur einseitig in einer Basisplatte gelagert.

Ferner ist z. B. aus der europäischen Patentanmeldung EP-A-0 014 231 ein anderes Datenspeichergerät mit einer Plattenkassette bekannt, bei der die Übertragerköpfe auf zwei unabhängig voneinander positionierbare Wagen verteilt sind. Dadurch wird ein zeitlich besserer Zugriff zu den Daten ermöglicht. Die Spindel für die Speicherplatten liegt quer und wird in einem dazu längs geteilten Basisgehäuse mit U-förmigem Querschnitt beidseitig gelagert.

Der Nachteil dieser Anordnung besteht darin, daß das Basisteil aus zwei Seitenteilen zusammengeschraubt ist. So ist ein hoher Aufwand und große Genauigkeit erforderlich, um die beiden Seitenteile maßgenau zusammenzufügen und damit ein Schrägstehen der in den Seitenteilen gelagerten Spindel zu vermeiden. Die Verschraubung der Seitenteile und der dazwischenliegenden Dichtstreifen bedeuten ein Risiko für die Festigkeit bzw. für die staubfreie Abdichtung des Innenraumes des Basisteiles.

Für den hinteren Abschluß des Basisteiles ist eine kompliziert gestaltete Rückwand erforderlich. Oben wird die Plattenkassette durch eine Abdeckhaube abgeschlossen. Das System der Abdichtungen zwischen den Basisseitenteilen, der Rückwand und der Abdeckhaube ist aufwendig. Manche Dichtelemente müssen ihre Funktion gleichzeitig in zwei Ebenen, die zueinander in einem Winkel stehen, erfüllen, was eine sehr genaue Fertigung und Montage voraussetzt.

Die Führungsbahnen für die Wagen müssen aufwendig auf die Spindelmitte und auf eine parallele Ebene zu den Speicherplatten einjustiert werden. Besonders problematisch ist es, den Höhenabstand der Tragarme für die Übertragerköpfe zu den Speicherplatten genau einzustellen bzw. zu überprüfen. Da die Lage der Speicherplatten durch das Spindelfestlager wesentlich bestimmt wird, betrifft dieses Zuordnungsproblem vor allem jene Übertragerköpfe, deren Führungsbahn in dem Basisseitenteil angeordnet ist, in welchem sich das Spindelloslager befindet.

Der vorliegenden Erfindung liegt eine Plattenkassette zugrunde, bei der die oben aufgezeigten Nachteile vermieden sind. Insbesondere hat die Erfindung folgende Aufgaben zu lösen:

Es soll ein verwindungssteifes, ungeteiltes Basisteil geschaffen werden.

Angestrebt wird ein einfacher Ein- und Ausbau der Spindel, also ohne vorheriges Auseinanderschrauben von tragenden Gehäuseteilen.

Ein einfacher konstruktiver Aufbau ist zu erzielen, der fertigungstechnisch eine genaue Zuordnung der Speicherplatten zu den Übertragerköpfen mit geringen mechanischen Toleranzen erlaubt, eine einfache meßtechnische Überprüfung zuläßt und problemlose Montage ohne teuere Justierarbeit ermoglicht.

Diese Aufgaben werden bei einer Plattenkassette der eingangs genannten Art erfindungsgemäß mit Hilfe der im Kennzeichen des Anspruches 1 genannten Merkmale gelöst.

Weitere Einzelheiten der Erfindung und zweckmäßige Ausgestaltungen dieser Lösung sind den unteransprüchen zu entnehmen.

Die Erfindung ist nachstehend in einem Ausführungsbeispiel anhand der Zeichnungen beschrieben. Es zeigen:

Figur 1 eine perspektivische Darstellung einer erfindungsgemäß ausgebildeten Plattenkassette ohne Spindel, Speicherplatten und vordere Abdeckung;

Figur 2 eine Seitenansicht dieser Plattenkassette im Schnitt;

Figur 3 eine Aufsicht auf die Plattenkassette im Schnitt und die seitliche Aufhängung der Plattenkassette im Laufwerk;

Figur 4 eine hintere Ansicht der Plattenkassette und die Aufhängung der Plattenkassette im Laufwerk;

Figur 5 eine Schnittdarstellung längs der Schnittlinie AB von Fig. 4;

Figur 6 die beiden Träger der Wagenführung im Schnitt und die Höhenzuordnung der Übertragerköpfe zu den Speicherplatten;

Figur 7 eine Alternativlösung für die Spindellagerung; und

Figur 8 die Baueinheit für die Alternativlösung nach Fig. 7 vor dem Einbau in das Gehäuse.

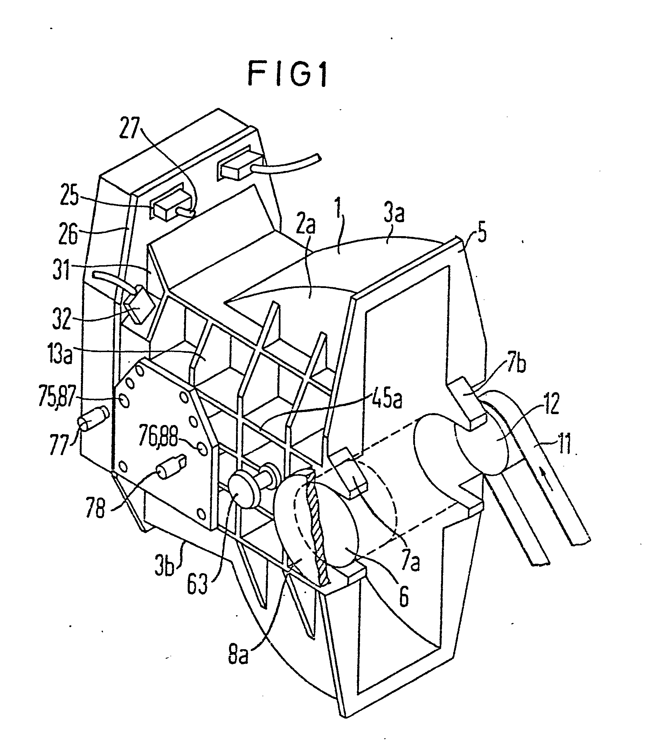

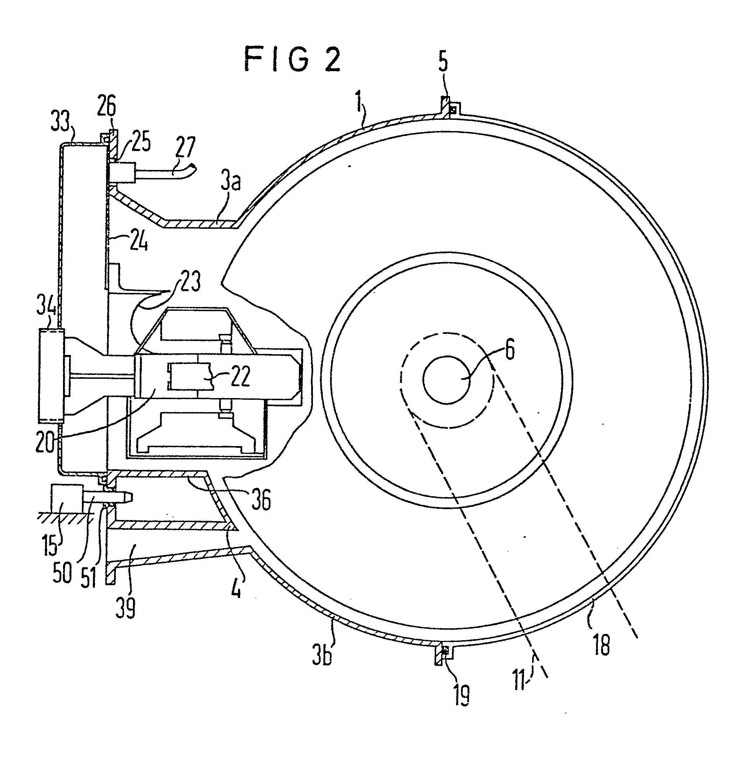

Wie aus den Fig. 1, 2 und 3 ersichtlich, besteht das Basisteil 1 aus nur einem Bauteil. Das dünnwandige und damit leichte Gußstück hat einen geschlossenen rechteckigen Rohrquerschnitt. Die Seitenwände 2a und 2b sind verrippt und durch Zwischenstege 4 gegenseitig verankert. Die obere und untere Gußwand 3a und 3b erweitern sich nach vorne trichterartig. Die vordere Stirnseite wird durch einen Flansch 5 gebildet, welcher die axialen Kräfte aufnimmt, die durch die federbelastete Spindellagerung verursacht werden. Ferderbelastete Spindeln werden bei Plattenspeichern allgemein verwendet, um Spielfreiheit zu erlangen.

Das Basisteil 1 übernimmt die geometrische Zuordnung der Funktionselemente. Die dazu nötigen Bearbeitungsflächen befinden sich an den für die Bearbeitung und Überprüfung gut zugänglichen Außenflächen 45a und 45b sowie der Aufnahmegabel 7a und 7b für die Spindel 6.

Die Spindel 6 ist waagerecht angeordnet und wird auf beiden Seiten in je einer Aufnahmegabel 7a und 7b gelagert. Dadurch wird ein besseres Schwingungsverhalten gegenüber der bisher üblichen einseitigen Spindellagerung erreicht.

Durch die Lagerung der Spindel 6 in den Aufnahmegabeln 7a bzw. 7b kann die Riemenscheibe 12 unmittelbar neben dem Kugellager 9b angeordnet werden. Das durch den Riemenzug verursachte Biegemoment bleibt damit klein.

Die Plattenkassette wird vorne mit einer halbkreisförmigen Abdeckhaube 18 abgeschlossen. Diese Ausführungsform besteht vorzugsweise aus Kunststoff mit einer umlaufenden Schnurdichtung 19.

Prinzipiell ist es auch möglich, die Abdeckhaube 18 aus Metall, z. B. aus dem gleichen Werkstoff wie das Basisteil 1 herzustellen, um die Spindelbuchsen 8a und 8b durch eine geschlossene Bohrung zu umschließen. Hierbei werden die Spindelbuchsen 8a und 8b in gleicher Weise wie bei der Abdeckhaube aus Kunststoff nur an den Aufnahmegabeln 7a bzw. 7b des Basisteiles 1 angeschraubt. Ein Vorteil dieser Lösung besteht darin, daß bei der Montage die Lagerbuchsen 8a und 8b der Spindel 6 sicher in die Aufnahmegabeln 7a bzw. 7b gedrückt werden.

Der Ein- und Ausbau der Spindel 6 in das Basisteil 1 ist einfach, weil die Spindel ohne Zerlegen dieses Basisteils 1 in die Aufnahmegabeln 7a bzw. 7b eingeschoben werden kann.

Die Schreib- und Lesesignale werden von den Magnetköpfen 22 über flexible Bandleitungen 23 in einer Abrollschleife zu einer elektrischen Flachbaugruppe 24 geführt. Durch ein Fenster 25 im hinteren Flansch 26 des Basisteiles 1 wird von außen eine Leitung 27 zum Anschluß an die Schreib-Lese-Elektronik angesteckt. Damit befinden sich alle angelöteten Bauelemente auf einer Seite der elektrischen Flachbaugruppe 24, was eine kostengünstige Fertigung ermöglicht.

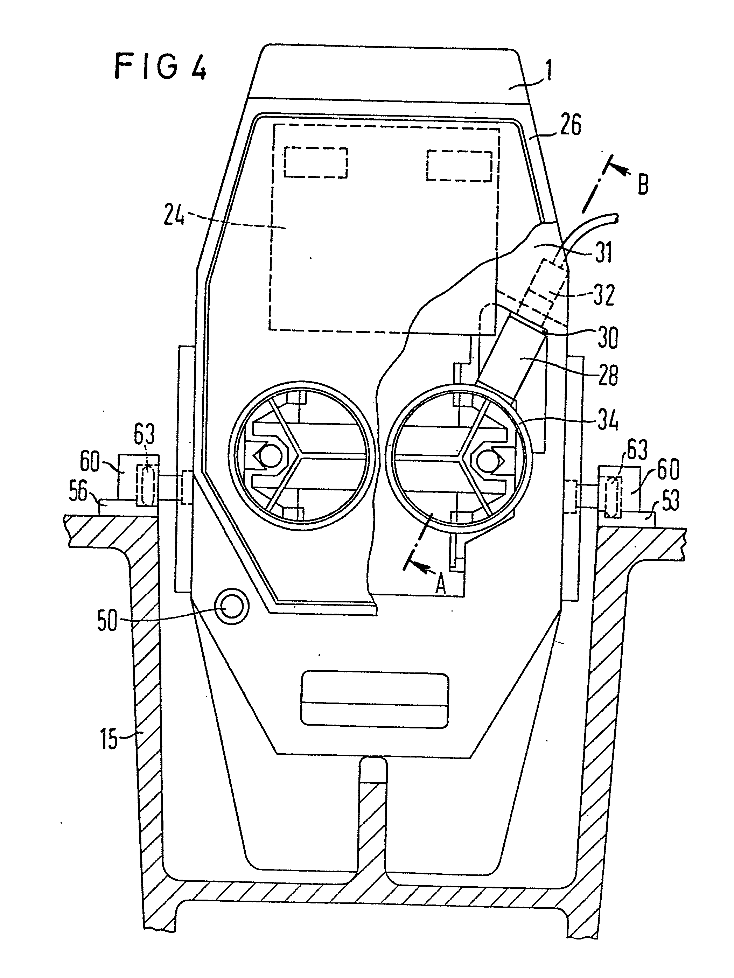

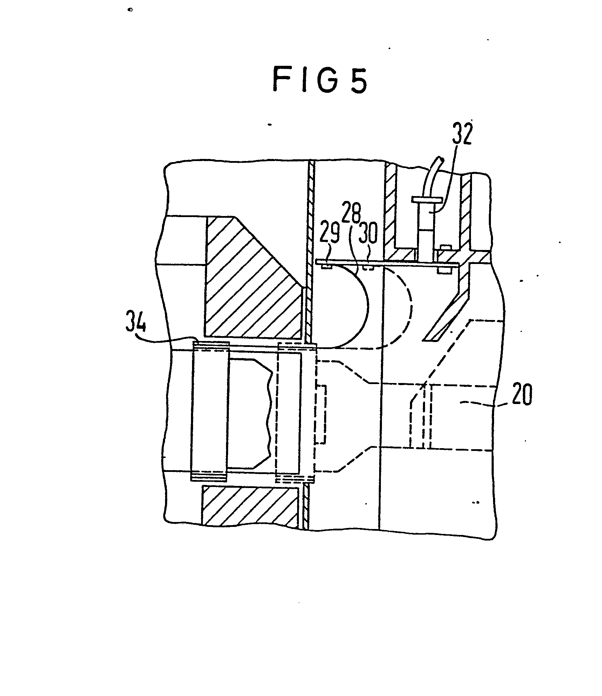

Wie in Fig. 4 und 5 ersichtlich, erfolgt die Stromzuführung für die beiden Tauchspulen 34 über flexible Strombänder 28. Sie werden, gesichert über eine Zugentlastung 29, an einer kleinen Leiterplatte 30 kontaktiert, die in einer Vertiefung 31 des Basisteiles 1 angeschraubt wird. Die Steckverbindung 32 für den elektrischen Anschluß der Tauchspulen 34 an das Laufwerk liegt an gut zugänglicher Stelle. Die Baugruppe ragt nicht aus der Plattenkassette hervor.

Die Plattenkassette kann außerhalb des Laufwerkes 16 gut abgestellt werden. Die Auflagepunkte sind jeweils unten am vorderen Flansch 5 und am hinteren Flansch 26.

Die Zuführung der gefilterten Luft erfolgt durch einen Luftkanal 39, der Bestandteil des Basisteiles 1 ist und durch die gewählte Formgebung zugleich der weiteren Versteifung dieses Basisteiles 1 dient.

Durch Zusammenfügen zweier Plattenkassetten entsteht ein Aufbauprinzip für ein Datenmodul mit vier Positionierwagen. Das dargestellte Prinzip der Wagenführung ist zwar bekannt. Wesentlich ist hierbei jedoch die Art des Einbaues der Funktionselemente in das Basisteil.

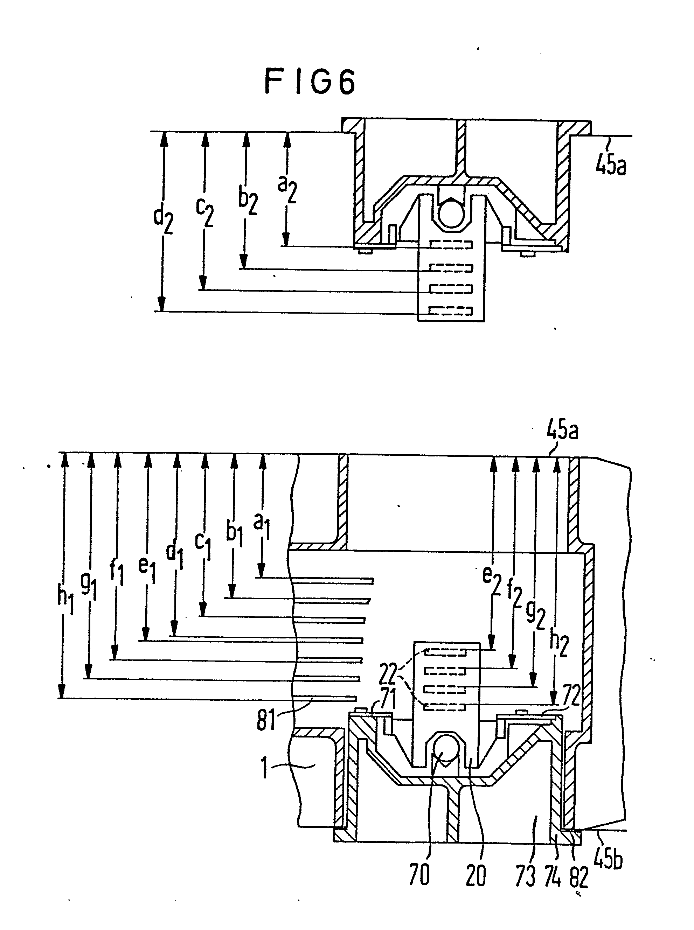

Wie die Fig. 6 zeigt, sind die drei Wagenführungselemente (Führungsstange 70, feste Zuführungsplatte 71 und Andruckplatte 72) auf einer gemeinsamen Trägerplatte 73 montiert, die mit einem umlaufenden Bund 74 am Modulgehäuse 1 anliegt. Die beiden Trägerplatten 73 ragen durch je ein Fenster in den Seitenwänden 2a) und b) in das Innere des Basisteiles 1.

Dieser umlaufende Bund 74 und die Anlageflächen für die drei Wagenführungselemente 70, 71, 72 werden bei der Herstellung in einer Aufspannvorrichtung auf einer Werkzeugmaschine bearbeitet, so daß die relative Lage der Wagenführungselemente zueinander ohne besondere Kosten sehr genau ist.

Bei der Bearbeitung werden vorzugsweise in der gleichen Aufspannvorrichtung zwei Paßbohrungen 75 und 76 eingebracht, in die ein zylindrischer Paßstift 77 und ein am herausragenden Ende angeschliffener Paßstift 78 gepreßt werden.

Beim Basisteil 1 werden die Außenflächen 45a und 45b für den Bund 74 der Trägerplatte 73, die Aufnahmegabeln für die Spindel 6 und die beiden Planflächen für die Anlage der Spindelbuchsen 8a und 8b in einer Aufspannung bearbeitet. Damit wird, ebenfalls mit geringem Kostenaufwand, eine hohe Genauigkeit in Bezug auf Rechtwinkligkeit zwischen der Wagenführung und der Spindel 6 erreicht.

Gleichzeitig werden auch die Paßbohrungen 87 und 88 für die Lagezuordnung der Trägerplatte 73 zum Basisteil 1 gebohrt. Damit wird ohne teure Justage eine exakte Fluchtung der Führungsstange 70 zur Spindelmitte gewährleistet. Der angeschliffene Paßstift 78 ermöglicht den Abstands-Toleranzausgleich zwischen den Paßstiften 77 und 78 und den Paßborhrungen 87 und 88 im Basisteil 1.

Die Außenfläche 45a ist also Ausgangs- und Meßbasis für alle Speicherplatten 81, weil das Spindelfestlager 9a auf dieser Seite liegt. (Siehe Fig. 1 und Fig. 6 mit den Abstandsmaßen $a_1$ bis $h_1$). Ferner ist die Außenfläche 45a Ausgangs- und Meßbasis für alle Übertragerköpfe 22, die sich auf der gleichen Seite wie das Loslager 9b befinden. Die Messung erfolgt durch das Fenster der Seitenwand 2a direkt auf die Halteelemente der Übertragerköpfe 22. (Siehe Maße $e_2$ bis $h_2$. Fig. 6).

Schließlich ist die Außenfläche 45a auch Meßbasis für alle Übertragerköpfe 22, die sich auf der gleichen Seite wie das Festlager 9a der Spindel 6 befinden.

(Maße a₂ bis d₂ bei ausgebauter Trägerplatte 73 vom Bund 74 bis zu den Übertragerköpfen 22).

Die erforderliche kleine Abstandstoleranz zwischen den Magnetköpfen 22 und den Speicherplatten 81 kann durch Beilegen von Abstandsblechen 82 zwischen den Bund 74 der Trägerplatten 73 und das Basisteil 1 einfach eingestellt werden. Die relative Lage der drei Führungselemente wird dadurch nicht verändert, so daß ein Schrägstellen oder Schlingern des Wagens 20 vermieden wird.

Anstelle der Abstandsbleche 82 kann der Toleranzausgleich auch durch Trägerplatten 73 mit verschiedenen Grundhöhen erfolgen.

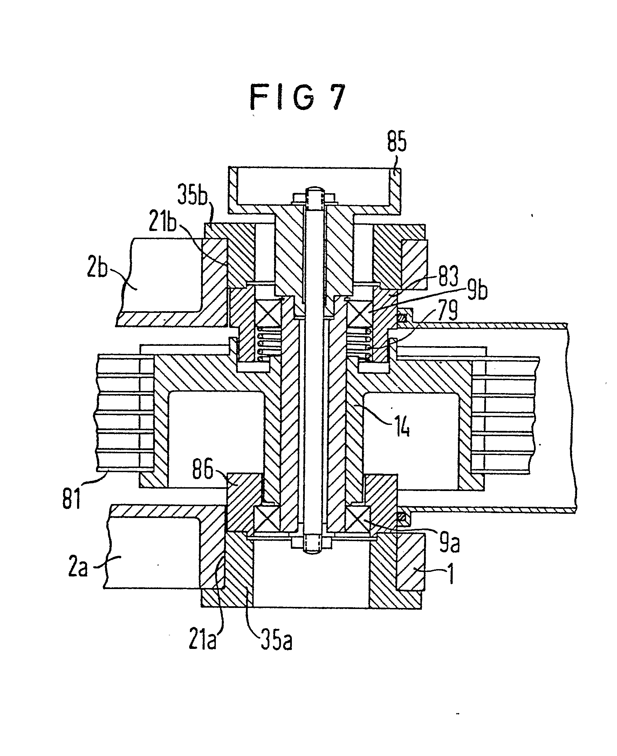

Fig. 7 zeigt eine zweite Möglichkeit, eine Spindel 14 im Basisteil 1 zu lagern. Das Basisteil 1 weist anstelle der beiden Gabeln 7a und 7b in den Seitenwänden 2a und 2b (Fig. 1) je eine geschlossene Bohrung 21a und 21b auf. Die beiden Bohrungen 21a und 21b können mit Buchsen 35a und 35b z. B. aus Stahl versehen werden, die z. B. durch Anschrauben, Einpressen oder Eingießen im Basisteil 1 befestigt werden.

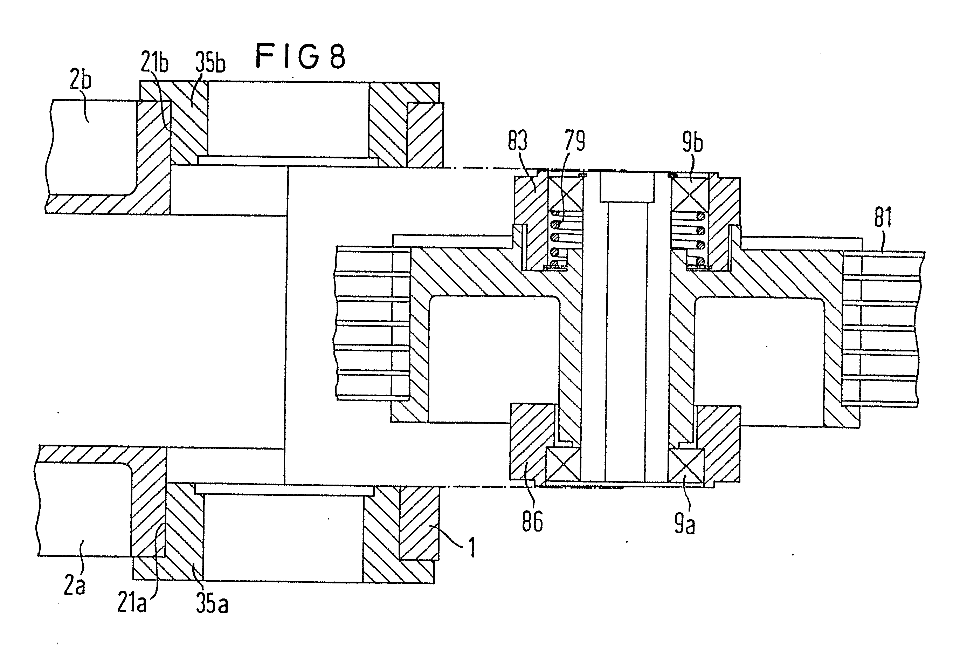

Den Einbau dieser Spindel 14 mit den Speicherplatten 81 in das Basisteil 1 zeigt Fig. 8. Die Feder des Loslagers 79 drückt im nicht montierten Zustand die Spindelbuchse 83 zunächst so nach innen, daß die aus der Spindel 14 und den Spindelbuchsen 83 bzw. 86 bestehende Baueinheit (zunächst ohne Riemenscheibe 85) kürzer ist als die lichte Weite zwischen den Buchsen 35a und 35b des Basisteils 1. Die Baueinheit 14, 83, 86 kann damit in das Basisteil 1 eingeschoben, und, wie in Fig. 7 dargestellt, angeschraubt werden.

Die Spindelbuchse 83 des Loslagers wandert dabei wieder nach außen. Die Feder 79 erhält dadurch die für die Funktion erforderliche Vorspannung und die Spindelbuchsen 83 und 86 werden in den Bohrungen 21a und 21b des Basisteiles 1, bzw. in den Buchsen 35a und 35b genau zentriert. Zuletzt wird die Riemenscheibe 85 an der Spindel 14 befestigt.

Die Plattenkassette ist an drei Punkten im Laufwerk 15 aufgehängt. Zwei Aufhängebolzen 63 sind an den beiden Seitenwänden 2a und 2b angeordnet. Die Zugrichtung des Antriebriemens 11 liegt zwischen den beiden Aufhängebolzen 63.

Der dritte Punkt wird durch eine Buchse 51 im hinteren Flansch 26 des Basisteiles 1 und einem Zentrierstift 50 am Laufwerk 15 gebildet. Die Buchse 51 liegt etwa in der Wirkebene des Antriebriemens 11.

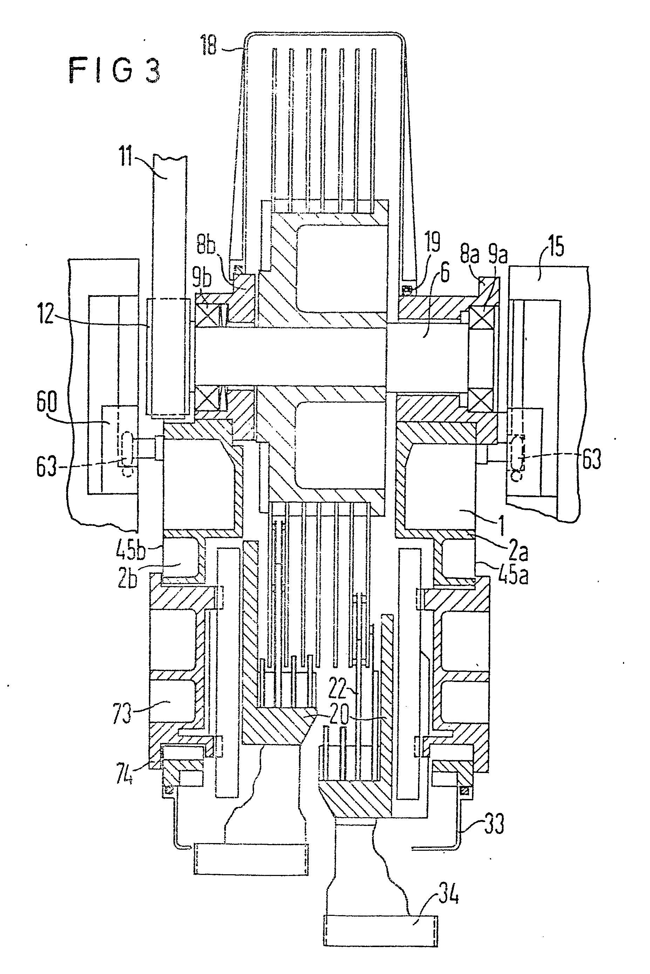

Wie Fig. 3 und 4 zeigen, wird die Plattenkassette im Laufwerk 15 durch zwei gleiche Käfige 60 festgehalten. Diese Käfige werden auf den Auflageleisten 53 und 56 aus Stahl festgeschraubt und umschließen mit geringem Spiel die Aufhängebolzen 63, ohne daß Befestigungskräfte, welche die Plattenkassette verbiegen könnten, auftreten. Die Auflage- bzw. die Anlagekräfte, die auf die Plattenkassette rückwirken, werden damit nur durch das Eigengewicht der Plattenkassette und die Riemenspannung bestimmt.

Die Aufhängebolzen 63 sind am Umfang abgerundet, so daß selbst bei großen Toleranzen der Auflageflächen oder schief eingeschraubten Aufhängebolzen 63 die Plattenkassette nicht verspannt werden kann.

Das geringe Spiel zwischen den Aufhängebolzen 63 und den Käfigen 60 kann durch eine elastische Auskleidung 61 (nicht dargestellt) der Käfige 60 ausgeglichen werden.

## Ansprüche

1. Plattenkassette für ein Datenspeichergerät mit einem geschlossenen, verwindungssteifen, am Datenspeichergerät zu befestigenden Gehäuse zum Aufnehmen von wenigstens einer auf einer drehbaren Spindel angeordneten Speicherplatte und wenigstens einem auf einer Führungsbahn verschiebbaren Positionierwagen als Träger für Übertragerköpfe, dadurch gekennzeichnet, daß zur gemeinsamen Aufnahme der Spindel (6) und einer Trägerplatte (73), auf der die Führungsbahn des Positionierwagens (20) festgelegt ist, ein Basisteil (1) vorgesehen ist, das als einteiliger verwindungssteifer Kasten ausgebildet ist und bei parallel ausgerichteten Seitenwänden (2a, 2b) einen rechteckförmigen, sich in Richtung der Spindelachse trichterförmig erweiternden Querschnitt mit einer Stirnfläche (5) aufweist und bei dem eine dieser Seitenwände (2a) eine Außenfläche (45a) besitzt, die eine Meßbasis in flächenparalleler und in dazu vertikaler Richtung bildend, eine Anlagefläche sowohl für die über einem Fenster in der Seitenwand angeflanschte Trägerplatte (73) als auch für eine doppelseitige Lagerung der Spindel (6) in den Seitenwänden (2a, 2b) darstellt, wobei die Spindel und die Lagerungen derart ausgebildet sind, daß die Spindel beim Montieren von der Stirnfläche her in die Lagerungen im Basisteil einführbar ist.

2. Plattenkassette für ein Datenspeichergerät nach Anspruch 1, dadurch gekennzeichnet, daß die Stirnfläche (5) des Basisteils (1) so ausgebildet ist, daß die Seitenwände (2a, 2b) je eine symmetrisch zur Spindelachse aus der Stirnfläche vorspringende Gabel (7a bzw. 7b) zur Aufnahme der Spindel (6) aufweisen.

3. Plattenkassette für ein Datenspeichergerät nach anspruch 1, dadurch gekennzeichnet, daß die Spindel (6) beidseitig in je einer geschlossenen Bohrung (21a und 21b) der Seitenwände (2a bzw. 2b) gelagert ist, wobei diese Bohrungen mit zusätzlichen Buchsen (35a bzw. 35b) ausgekleidet sind, daß auf die Spindel je ein Festlager (9a) und ein Loslager (9b) mit je einer darüber angeordneten Lagerbuchse (86 bzw. 83) aufgeschoben sind und innerhalb der dem Loslager zugeordneten Lagerbuchse (83) une koaxial mit dem Loslager eine Spannfeder (79) derart festgelegt ist, daß diese zugeordnete Lagerbuchse nach innen gedrückt wird, so daß die Spindel in das Basisteil einführbar ist, und daß paarweise einander zugeordnet, je eine der zusätzlichen Buchsen (35a, 35b) mit der entsprechenden Lagerbuchse (86 bzw. 83) seitlich verschraubt ist, wodurch die Lagerbuchse (83) des Loslagers (9b) durch die seitliche Anschraubung der Spindel (14) nach außen gezogen wird, so daß die Lagerbuchsen in die zusätzlichen Buchsen im Basisteil eingreifen und damit die Spindel formschlüssig und lagerichtig im Basisteil festgelegt ist.

4. Plattenkassette für ein Datenspeichergerät nach einem der Ansprüche 1 bis 3 mit einer Mehrzahl von auf der Spindel angeordneten Speicherplatten und einem Paar von Positionierwagen, die über je eine an der entsprechenden Seitenwand angeflanschte Trägerplatte festgelegt sind, dadurch gekennzeichnet, daß die Außenfläche (45a) des Basisteiles (1) als Anlagefläche für die Festlagerbuchse (8a) der Spindel (6) bzw. die zusätzliche Buchse (35a) im Basisteil (1) dient und damit Meßbasis für alle Speicherplatten (81) ist, daß auf dieser Außenfläche (45a) die festlagerseitige Trägerplatte (73) mit einem Bund (74) aufliegt und damit als Bezugs-Meßbasis bei einer Justierung der Übertragerköpfe (22) dient, die mit auf die Trägerplatte bereits aufgesetzten Positionierwagen (20) vor dem Einsetzen in das Basisteil (1) ausgeführt wird, und daß ferner dieselbe Außenfläche (45a) als Bezugs-Meßbasis bei der Justierung der Übertragerköpfe (22) dient, die der loslagerseitigen Trägerplatte zugeordnet sind, wobei diese Justierung im eingebauten Zustand der Trägerplatte mit einer Messung durch ein loslagerseitiges Fenster in der Seitenwand vorzunehmen ist, wobei die einander zugeordneten Höhen der Speicherplatten (81) und der entsprechenden Übertragerköpfe (22) überprüfbar und ein gegebenenfalls notwendiger Toleranzausgleich durch Zwischenlegen eines Abstandselementes (82) zwischen Bund (74) und Basisteil (1) oder durch Herstellen von Trägerplatten (73) mit geringfügig unterschiedlichen Maßen zwischen Bund (74) und Führungselementen für den Positionierwagen (20) ausführbar ist.

5. Plattenkassette für ein Datenspeichergerät nach Anspruch 4 mit einer auf die Spindelachse ausgerichteten und auf der zugeordneten Trägerplatte festgelegten Führungsschiene für den Positionierwagen, dadurch gekennzeichnet, daß für eine maßlich genaue Zuordnung der Trägerplatte (73) zur Spindel (6) im Basisteil (1) Zentrierbohrungen (87 und 88) angeordnet sind, die vorzugsweise in einem Arbeitsgang zusammen mit der Spindelbohrung hergestellt sind und daß diesen Zentrierbohrungen zugeordnet, die Trägerplatte (73) Aufnahmebohrungen (75 und 76) und in diesen festgelegt Paßbolzen (77 und 78) in genauer maßlicher Zuordnung zu der Führungsstange (70) aufweist, wobei einer der Paßstifte (78) zum Toleranzausgleich für die Bohrungsabstände seitlich angeschliffen ist.

6. Plattenkassette für ein Datenspeichergerät nach einem der Ansprüche 1 bis 5, dadurch gekennzeichnet, daß zum Zuführen gefilterter Luft ein Kanal (39) vorgesehen ist, der in das Basisteil (1) integriert ist und zusätzlich zu dessen Versteifung dient.

7. Plattenkassette für ein Datenspeichergerät nach einem der Ansprüche 1 bis 6, dadurch gekennzeichnet, daß die Übertragerköpfe (22) über flexible Leitungen (23) mit einer elektrischen Flachbaugruppe (24) verbunden sind, die direkt an einem hinteren Flansch (26) des Basisteiles (1) befestigt ist und Anschlußstecker (27) aufweist, die durch Fenster (25) am hinteren Flansch ins Freie ragen.

8. Plattenkassette für ein Datenspeichergerät nach einem der Ansprüche 1 bis 7 mit einer Positioniertauchspule zum Verschieben des Positionierwagens, dadurch gekennzeichnet, daß diese Positioniertauchspule (34) über eine flexible Leitung (28) an eine kleine geätzte Leiterplatte (30) angeschlossen ist, die einen Anschlußstecker (32) aufweist, der in einer gut zugänglichen Nische (31) des Basisteiles (1) liegt.

9. Plattenkassette für ein Datenspeichergerät nach einem der Ansprüche 1 bis 8, dadurch gekennzeichnet, daß zum Antreiben der Spindel (6) eine Riemenscheibe (12) vorgesehen ist, die unmittelbar neben dem Spindel-Loslager (9b) angeordnet ist und damit durch den Riemenzug nur ein geringes Biegemoment auf die Spindel ausgeübt wird.

10. Plattenkassette für ein Datenspeichergerät nach einem der Ansprüche 1 bis 9, gekennzeichnet durch eine die Lagerstelle der Spindel (6) umfassende Abdeckhaube (18), die an der Stirnfläche (5) des Basisteils (1) angeflanscht ist.

11. Plattenkassette für ein Datenspeichergerät nach einem der Ansprüche 1 bis 9, dadurch gekennzeichnet, daß durch stirnseitiges Zusammenfügen von zwei Plattenkassetten an den vorderen Stirnflächen (5) eine große Plattenkassette mit einer Spindel (6) und vier Positionierwagen (20) gebildet ist.

## Claims

1. A disc cartridge for a data storage apparatus with a closed, distortion-resistant housing which is to be attached to the data storage apparatus and which serves to accommodate at least one storage disc arranged on a rotatable spindle and at least one positioning carriage, which is displaceable on a guide path, as a carrier for transducer heads, characterised in that for the common accommodation of the spindle (6) and a carrier plate (73) on which the guide path of the positioning carriage (20) is fixed, there is provided a base portion (1) which comprises an integral, distortion-resistant box and when the side walls (2a, 2b) are aligned in parallel has a rectangular cross-section, which widens in funnel-form in the direction of the spindle axis, with an end surface (5), and wherein one of these side walls (2a) has an outer surface (45a) which — forming a measurement base in the surface-parallel direction and the direction vertical thereto —

constitutes a contact surface both for the carrier plate (73) which is flange-attached via a window in the side wall and also for a double-sided mounting of the spindle (6) in the side walls (2a, 2b), where the spindle and the mountings are designed to be such that during mounting the spindle can be introduced into the bearings in the base portion from the direction of the end surface.

2. A disc cartridge for a data storage apparatus as claimed in Claim 1, characterised in that the end surface (5) of the base portion (1) is designed to be such that the side walls (2a, 2b) each have a fork portion (7a, 7b) which projects from the end surface symmetrically to the spindle axis and which serves to accommodate the spindle (6).

3. A disc cartridge for a data storage device as claimed in Claim 1, characterised in that the spindle (6) is mounted on each side in a closed bore (21a, 21b) of the side walls (2a, 2b), where these bores are clad with additional linings (35a, 35b), that a fixed bearing (9a) and a movable bearing (9b), over each of which is arranged a bearing bush (86, 83) are each positioned on the spindle, and within the bearing bush (83) assigned to the movable bearing and coaxial with the movable bearing a tension spring (79) is fixed in such manner that this assigned bearing bush is pressed inwards so that the spindle can be introduced into the base portion and that, assigned to one another in pairs, one of the additional linings (35a, 35b) is laterally screwed to the corresponding bearing bush (86, 83) as a result of which the bearing bush (83) of the movable bearing (9b) is pulled outwards by the lateral screwing of the spindle (14) so that the bearing bushes engage into the additional linings in the base portion and the spindle is thus shape-locked in the base portion in the correct position.

4. A disc cartridge for a data storage apparatus as claimed in one of the Claims 1 to 3 with a plurality of storage discs arranged on the spindle and with a pair of positioning carriages which are each fixed over a carrier plate which is flange-attached to the corresponding side wall, characterised in that the outer surface (45a) of the base portion (1) serves as a contact surface for the fixed bearing bush (8a) of the spindle (6) and the additional lining (35a) in the base portion (1) and thus constitutes a measurement base for all the storage discs (81), that the carrier plate (73), arranged on the side of the fixed bearing, rests by means of a collar (74) on this outer surface (45a) and thus serves as a reference measurement base in the adjustment of the transducer heads (22) which adjustment is carried out with the positioning carriages (20) already placed on the carrier plate prior to insertion into the base portion (1) and that moreover the same outer surface (45a) serves as a reference measurement base in the adjustment of the transducer heads (22) which are assigned to the carrier plate which is located on the side of the movable bearing, which adjustment is to be carried out when the carrier plate is in the installed state with measurement through a window in the side wall, arranged on the side of the movable bearing, where the mutually assigned heights of the storage discs (81) and of the corresponding transducer heads (22) can be checked and any tolerance compensation which may be needed can be carried out by interposing a spacing element (82) between the collar (74) and the base portion (1) or by producing carrier plates (73) having slightly different dimensions between the collar (74) and the guide elements for the positioning carriage (20).

5. A disc cartridge for a data storage apparatus as claimed in Claim 4, with a guide rail, which is aligned to the spindle axis and is positioned on the assigned carrier plate, for the positioning carriage, characterised in that for a dimensionally accurate assignment of the carrier plate (73) to the spindle (6) in the base portion (1) there are provided centring bores (87 & 88) which are preferably produced in one operating step together with the spindle bore, and that, assigned to these centring bores, the carrier plate (73) has receiving bores (75 & 76) and, fixed therein, fitting bolts (77 & 78) accurately dimensionally assigned to the guide rod (70), where one of the fitting pins (78) is laterally ground for tolerance compensation for the bore spacings.

6. A disc cartridge for a data storage apparatus as claimed in one of the Claims 1 to 3, characterised in that for the introduction of filtered air a channel (39) is provided which is integrated into the base portion (1) and additionally serves to keep the base portion rigid.

7. A disc cartridge for a data storage apparatus as claimed in one of the Claims 1 to 6, characterised in that the transducer heads (22) are connected via flexible lines (23) to an electrical flat assembly (24) which is directly attached to a rear flange (26) of the base portion (1) and has connecting plugs (27) which project into the open through windows (25) at the rear flange.

8. A disc cartridge for a data storage apparatus as claimed in one of the Claims 1 to 7 with a positioning plunger for displacing the positioning carriage, characterised in that this positioning plunger (34) is connected via a flexible line (28) to a small etched circuit board (30) which has a connecting plug (32) which is located in an easily accessible recess (31) in the base portion (1).

9. A disc cartridge for a data storage apparatus as claimed in one of the Claims 1 to 8, characterised in that the spindle (6) is driven by means of a pulley (12) which is arranged directly beside the spindle movable bearing (9b) and thus the tension on the pulley exerts only a slight bending moment on the spindle.

10. A disc cartridge for a data storage device as claimed in one of the Claims 1 to 9, characterised by a covering cap (18) which encompasses the bearing of the spindle (6) and is flange-attached at the end surface (5) of the base portion (1).

11. A disc cartridge for a data storage apparatus as claimed in one of the Claims 1 to 9, characterised in that the means of the face assembly of two disc cartridges at the front end surfaces (5) a large disc cassette with a spindle (6) and four positioning carriages (20) is formed.

## Revendications

1. Cassette à disques pour un appareil d'enregistrement de données comportant un boîtier fermé, résistant à la déformation, destiné à être fixé sur l'appareil d'enregistrement de données et servant à recevoir au moins un disque de mémoire disposé sur une broche rotative, et au moins un chariot de positionnement déplaçable sur un guide et servant de support pour les têtes de transducteurs, caractérisée par le fait que pour loger en commun la broche (6) et une plaque de support (73) sur laquelle le guide du chariot de positionnement (20) est fixé, il est prévu une partie de base (1) qui est réalisée sous la forme d'une boîte d'une seule pièce résistant à la déformation et qui possède une section transversale rectangulaire s'étendant en forme de trémie suivant la direction de l'axe de la broche et comportant une face frontale (5), dans le cas de parois latérales (2a, 2b) parallèles, et dans laquelle l'une de ces parois latérales (2a) possède une surface extérieure (45a) qui, tout en formant une base de mesure dans une direction parallèle à la surface et dans une direction perpendiculaire à cette dernière, représente une surface d'appui aussi bien pour la plaque de support (73) raccordée par brides par l'intermédiaire d'une fenêtre dans la paroi latérale ainsi que pour un soutien sur deux côtés de la broche (6) dans les parois latérales (2a, 2b), la broche et les paliers de soutien étant agencés de telle sorte que lors du montage à partir de la face frontale, la broche peut être introduite dans les paliers de soutien dans la partie de base.

2. Cassette à disques pour un appareil d'enregistrement de données suivant la revendication 1, caractérisée par le fait que la face frontale (5) de la partie de base (1) est agencée de telle sorte que les parois latérales (2a, 2b) possèdent chacune une fourche (7a, 7b) qui fait saillie symétriquement par rapport à l'axe de la broche à partir de la face frontale et sert à recevoir la broche (6).

3. Cassette à disques pour un appareil d'enregistrement de données suivant la revendication 1, caractérisée par le fait que la broche (6) est montée, à ses deux extrémités, dans des perçages fermés (21a et 21b) des parois latérales (2a et 2b), qui sont garnis par des coussinets supplémentaires (35a et 35b), qu'un palier fixe (9a) et un palier libre (9b), sur chacun desquels est disposé un coussinet (86 ou 83), sont emmanchés sur la broche et qu'un ressort de tension (79) est fixé à l'intérieur du coussinet (83) associé au palier libre et coaxialement à ce dernier, de telle sorte que ce coussinet de palier associé est repoussé vers l'intérieur si bien que la broche peut être introduite dans la partie de base, et que, alors que les coussinets supplémentaires (35a, 35b) sont associés entre eux par couples, l'un de ces coussinets supplémentaires est vissé latéralement au coussinet de palier correspondant (86 ou 83), ce qui a pour effet que le coussinet (83) du palier libre (9b) est tiré vers l'extérieur par suite du vissage latéral de la broche (14), si bien que les coussinets de palier s'engagent dans les coussinets supplémentaires disposés dans la partie de base et que la broche est de ce fait fixée dans la partie de base selon une liaison par formes complémentaires et avec un soutien correct.

4. Cassette à disques pour un appareil d'enregistrement de données suivant l'une des revendications 1 à 3, comportant une multiplicité de disques de mémoire disposés sur une broche et un couple de chariots de positionnement, qui sont fixés au-dessus de plaques de support respectives raccordées par brides à la paroi latérale correspondante, caractérisée par le fait que la surface extérieure (45a) de la partie de base (1) sert de surface d'appui pour le coussinet de palier fixe (8a) de la broche (6) ou pour le coussinet supplémentaire (35a) dans la partie de base (1) et constitue de ce fait une base de mesure pour tous les disques de mémoire (81), que la plaque de support (73) située du côté du palier fixe prend appui par un collet (74) sur cette surface extérieure (45a) et sert par conséquent de base de mesure de référence lors de l'ajustement des têtes de transducteurs (22) qui sont équipés avec les chariots de positionnement (20) déjà montés sur la plaque de support, avant l'introduction dans la partie de base, et qu'en outre, cette même surface extérieure (45a) sert de base de mesure de référence lors de l'ajustement des têtes de transducteurs (22) qui sont associées à la plaque de support située du côté du palier libre, lequel ajustement doit être réalisé, lorsque la plaque de support est à l'état monté, avec une mesure effectuée à travers la fenêtre située du côté du palier libre et ménagée dans la paroi latérale, auquel cas les hauteurs réciproquement associées des disques de mémoire (81) et des têtes de transducteurs correspondantes (22) peuvent être contrôlées et une compensation éventuellement nécessaire des tolérances peut être réalisée moyennant le montage intercalé d'une entretoise (82) entre le collet (74) et la partie de base (1) ou bien grâce à la réalisation de plaques de support (73) avec des cotes légèrement différentes entre le collet (74) et les éléments de guidage du chariot de positionnement (20).

5. Cassette à disques pour un appareil d'enregistrement de données suivant la revendication 4, comportant un rail de guidage aligné sur l'axe de la broche et fixé sur la plaque de support associée et prévue pour le chariot de positionnement, caractérisée par le fait que pour une association précise du point de vue des cotes de la plaque de support (73) à la broche (6) dans la partie de base (20), il est prévu des perçages de centrage (87 et 88) qui sont réalisés ainsi que le perçage de la broche de préférence au cours d'une phase opératoire et en association à ces perçages de centrage, la plaque de support (13) comporte des perçages de réception (75 et 76), dans lesquels sont fixés des boulons ajustés (77 et 78) conformément à une association précise du point de vue des cotes par rapport à la barre de guidage (70), l'un des boulons ajustés (78) étant poli latéralement afin de compenser la tolérance sur les écartements de perçages.

6. Cassette à disques pour un appareil d'enregistrement de données suivant l'une des revendications 1 à 5, caractérisée par le fait que pour le guidage de l'air filtré, il est prévu un canal (39) qui est intégré dans la partie de base (1) et sert en supplément à la rigidification de cette dernière.

7. Cassette à disques pour un appareil d'enregistrement de données suivant l'une des revendications 1 à 6, caractérisée par le fait que des têtes de transducteurs (22) sont reliées par l'intermédiaire de conducteurs flexibles (23) à un module électrique plat (24) qui est fixé directement sur une bride arrière (26) de la partie de base (1) et comporte des connecteurs (27) qui font saillie à l'air libre à travers la fenêtre (25) ménagée dans la bride arrière.

8. Cassette à disques pour un appareil d'enregistrement de données suivant l'une des revendications 1 à 7, comportant une bobine mobile de positionnement servant au déplacement du chariot de positionnement, caractérisée par le fait que cette bobine mobile de positionnement (34) est raccordée par l'intermédiaire d'un conducteur flexible (28) à une petite plaquette à circuits imprimés (30) formée par attaque chimique et qui possède un connecteur de raccordement (32) qui est situé dans une niche (31) bien accessible de la partie de base (1).

9. Cassette à disques pour un appareil d'enregistrement de données suivant l'une des revendications 1 à 8, caractérisée par le fait que pour l'entraînement de la broche (6) il est prévu une poulie (12) qui est disposée directement à côté du palier libre (9b) de la broche et que, de ce fait, seul un faible moment de flexion est exercé sur la broche par la traction de la courroie.

10. Cassette à disques pour un appareil d'enregistrement de données suivant l'une des revendications 1 à 9, caractérisée par un capot (18) entourant le palier de la broche (6) et qui est raccordé par brides sur la face frontale (5) de la partie de base (1).

11. Cassette à disques pour un appareil d'enregistrement de données suivant l'une des revendications 1 à 9, caractérisée par le fait qu'une cassette à disques, de taille importante, comportant une broche (6) et quatre chariots de positionnement (20) est formée par la réunion frontale de deux cassettes à disques au niveau de leurs faces frontales avant (5).

# FIG1

# FIG 2

FIG 3

FIG 4

FIG 5

# F I G 6

## FIG 7

# FIG 8